Europäisches Patentamt

European Patent Office    (11) Numéro de publication: **0 363 268**

Office européen des brevets    **A1**

## (12) DEMANDE DE BREVET EUROPEEN

(21) Numéro de dépôt: 89402710.1    (51) Int. Cl.5: **B61F 5/16 , B61F 3/12 ,**
    **B61G 5/02**

(22) Date de dépôt: 03.10.89

(30) Priorité: 03.10.88 FR 8813298

(43) Date de publication de la demande:
11.04.90 Bulletin 90/15

(84) Etats contractants désignés:
AT BE CH DE ES FR GB GR IT LI LU NL SE

(71) Demandeur: **ARBEL FAUVET RAIL S.A.**
**194 Boulevard Faidherbe**
**F-59506 Douai Cédex(FR)**

(72) Inventeur: **Cardon, Christian**
**34 rue de Thelus Roclincourt**
**F-62223 St Laurent Blangy(FR)**

(74) Mandataire: **Ecrepont, Robert**
**Cabinet Ecrepont 12 Place Simon Vollant**
**F-59800 Lille(FR)**

(54) Dispositif d'accouplement de véhicules constituant une rame et rame ainsi obtenue.

(57) L'invention se rapporte à un dispositif d'accouplement de véhicules constituant une rame et à la rame ainsi obtenue, telle une rame de véhicules ferroviaires.

Il est caractérisé en ce que, pour maintenir énergiquement en position de coopération les portées sphériques (109, 111) de liaison entre elles des extrémités (5, 6) verticales, il comprend outre les deux portées sphériques (109, 111) précitées:
- d'une part, solidaire de l'une (6) des extrémités (5, 6) de véhicule (2, 3), une structure (50) délimitant avec l'extrémité (6) correspondante une fourche (55) dont les branches de laquelle fourche (55) s'insère l'autre extrémité (5) de véhicule et,
- d'autre part deux portées sphériques complémentaires (51, 52) coopérant entre elles et présentées par des pièces (53, 54) solidaires, l'une (54) de la structure (50) précitée et l'autre (53) de l'extrémité (5) de véhicule s'insérant dans la fourche, ces portées sphériques complémentaires (51, 52) étant concentriques aux premières portées sphériques (109, 111) des pièces de liaison (108, 112) insérées entre les extrémités de véhicule.

- Fig:1 -

# DISPOSITIF D'ACCOUPLEMENT DE VEHICULES CONSTITUANT UNE RAME ET RAME AINSI OBTENUE

L'invention se rapporte à un dispositif d'accouplement de véhicules constituant une rame et à la rame ainsi obtenue, telle une rame de véhicules ferroviaires.

L'intérêt suscité par ce type de moyen de transport comparativement au transport par wagons indépendants n'est aujourd'hui plus à démontrer.

Une telle rame (FR-A-1.561.318, CH-A-350.007, BE-728.101, US-A-2.125.184 et FR-A-2.348.092) comprend au moins un véhicule de tête et un véhicule de queue, tous deux équipés d'organes de tamponnement et de traction, et généralement au moins un véhicule intermédiaire relié entre eux et/ou aux véhicules précités par un dispositif d'accouplement.

Généralement ce dispositif d'accouplement entre les différents véhicules est de type à liaison sphérique dont les principaux éléments sont fixés au niveau des extrémités des véhicules et coopèrent entre eux.

Ces dispositifs assurent aussi la liaison des extrémités correspondantes de véhicules, chacun avec un ensemble de roulement tel un boggie disposé sous ledit dispositif d'accouplement.

Ces extrémités sont généralement constituées chacune d'un caisson comprenant une membrure supérieure et une membrure inférieure reliées entre elles par des longrines.

Par exemple, on connait (FR-A-2.603.855, figure 7) un tel dispositif selon lequel, non seulement la liaison entre deux véhicules contigus mais aussi la liaison avec le boggie est réalisée par une portée sphérique formée d'une petite rotule et d'une calotte sphérique dont elle épouse la surface sur plus d'une demi sphère afin d'assurer le blocage de ces pièces l'une dans l'autre.

Même si un tel dispositif d'accouplement donnait de bons résultats, on conçoit qu'il est pratiquement impossible de désaccoupler les véhicules. Or cela est nécessaire pour pouvoir modifier la composition de la rame.

Tel que ces dispositifs sont conçus, les charges de chaque véhicule sont réparties sur les sections des deux petites rotules situées chacune à l'une de ses extrémités et de ce fait la charge est nécessairement limitée et le véhicule manque de stabilité. De plus cette liaison ne peut transmettre les efforts de traction obligeant à prévoir une liaison séparée par exemple par des bielles articulées à l'une de leurs extrémités sur l'un des véhicules et à leur autre extrémité sur le boggie.

En outre, compte-tenu de ce qui précède, le dispositif est fragile et doit être l'objet d'une surveillance constante.

Afin de remédier à l'inconvénient de la limite de charge et du manque de stabilité, on connaît (EP-A-0134201) une rame dont les véhicules sont reliés entre eux et à un boggie par un dispositif comprenant pour la liaison des véhicules entre eux, une large sellette à portée sphérique convexe s'insérant dans une crapaudine à portée sphérique concave et dont, pour la liaison au boggie, le dispositif comprend une large sellette reposant sur le boggie par l'intermédiaire d'un large ressort pneumatique central.

Dans cette réalisation, les portées sphériques de la liaison entre les véhicules ne restent en contact que sous l'action de la pesanteur et peuvent donc se dégager plus ou moins l'une de l'autre notamment lors de vibrations et/ou secousses, lesquelles sont d'ailleurs générées par le ressort de la liaison au boggie.

On connaît également (FR-A-1.561.318) un véhicule dans lequel chaque boggie est relié à une extrémité de véhicule par un dispositif de liaison comprenant sous la dite extrémité une large coupelle à doubles portées sphériques dont la portée externe coopère avec la portée sphérique concave d'une large crapaudine portée par le boggie tandis que sa portée interne reçoit la portée sphérique convexe d'une bride traversée ainsi que la coupelle et la crapaudine par un tirant vertical retenant la coupelle en appui sur la crapaudine.

Afin de libérer l'articulation sphérique, la coupelle présente évidemment un perçage vertical de diamètre supérieur à celui du corps du tirant.

Pour l'association entre elles des extrémités de véhicules, ce dispositif est alors combiné à une chape portée par l'une des extrémités et dans laquelle l'autre extrémité s'articule autour d'un axe vertical.

Le jeu axial de la chape crée une instabilité favorisant le martèlement d'une extrémité sur l'autre ce qui détériore les pièces.

En outre, même si l'axe présente une portée sphérique, la liberté d'articulation entre les extrémités de véhicules sauf autour de l'axe vertical est trop limitée.

De plus, elle s'opère généralement autour d'un point excentré par rapport au point autour duquel sont permis les mouvements entre une extrémité de véhicule et le boggie.

Un des résultats que l'invention vise à obtenir est de remédier à ces inconvénients.

A cet effet, elle se rapporte à un dispositif d'accouplement à portées sphériques entre véhicule et avec un boggie admettant des charges importantes et autorisant un désaccouplement aisé tout en conférant au véhicule une grande stabilité.

Un autre résultat également visé par l'invention est un tel dispositif qui puisse assurer à lui seul la transmission au boggie des efforts de traction.

Est encore un résultat de l'invention, un dispositif de prix de revient plus modéré que les dispositifs connus à ce jour.

A cet effet et notamment pour maintenir énergiquement en position de coopération les portées sphériques de liaison entre elles des extrémités de vhéicules, l'invention a pour objet un dispositif d'accouplement du type précité notamment caractérisé en ce qu'il comprend, outre les deux portées sphériques précitées :

- d'une part, solidaire de l'une des extrémités de véhicule, une structure délimitant avec l'extrémité correspondante une fourche dont les branches ont leurs axes longitudinaux qui se surplombent et entre lesquelles branches de laquelle fourche s'insère l'autre extrémité de véhicule et,

- d'autre part deux portées sphériques complémentaires coopérant entre elles et présentées par des pièces solidaires, l'une de la structure précitée et l'autre de l'extrémité de véhicule s'insérant dans la fourche, ces portées sphériques complémentaires étant concentriques aux premières portées sphériques des pièces de liaison insérées entre les extrémités de véhicule.

Elle a également pour objet la rame dont au moins deux des véhicules sont accouplés à l'aide de de dispositif.

D'autres résultats et avantages apparaitront lors de la description ci-après faite et qui représent schématiquement :

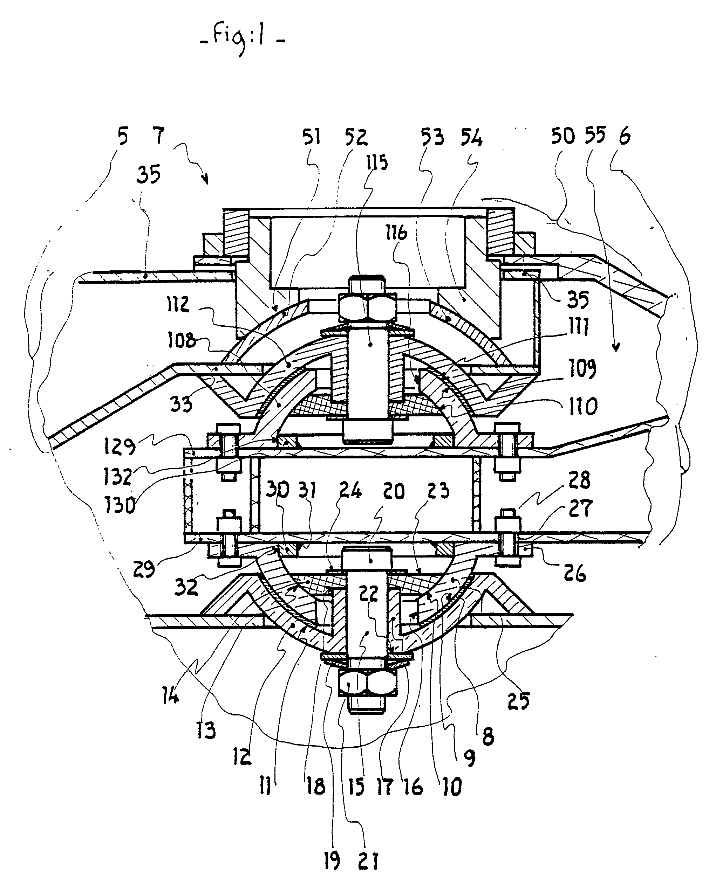

　　- figure 1 : le dispositif vu en coupe longitudinale,

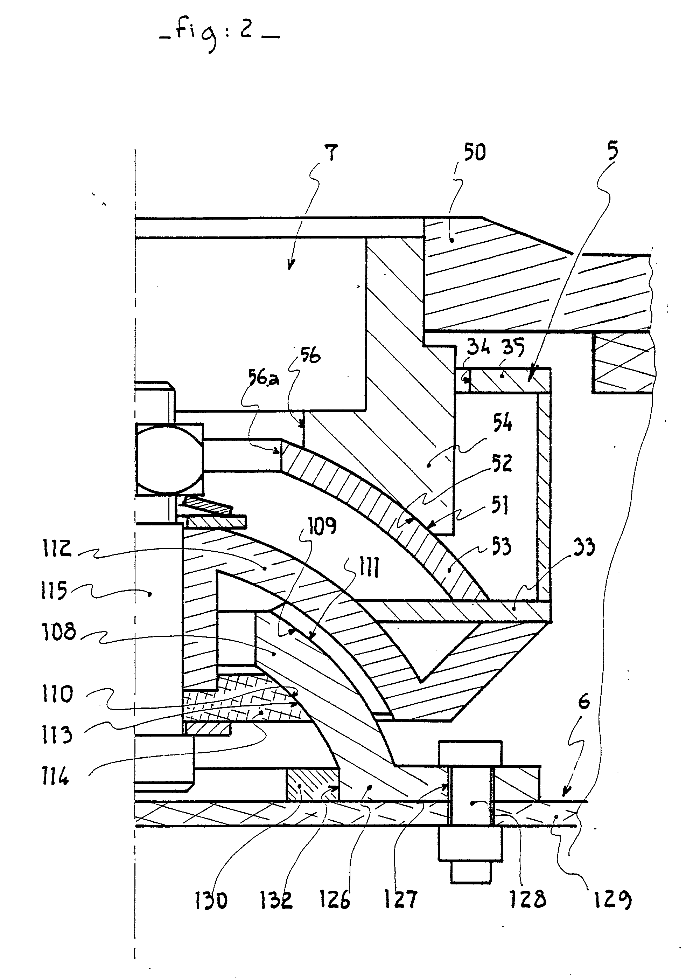

　　- figure 2 : le dispositif vu en coupe transversale partielle,

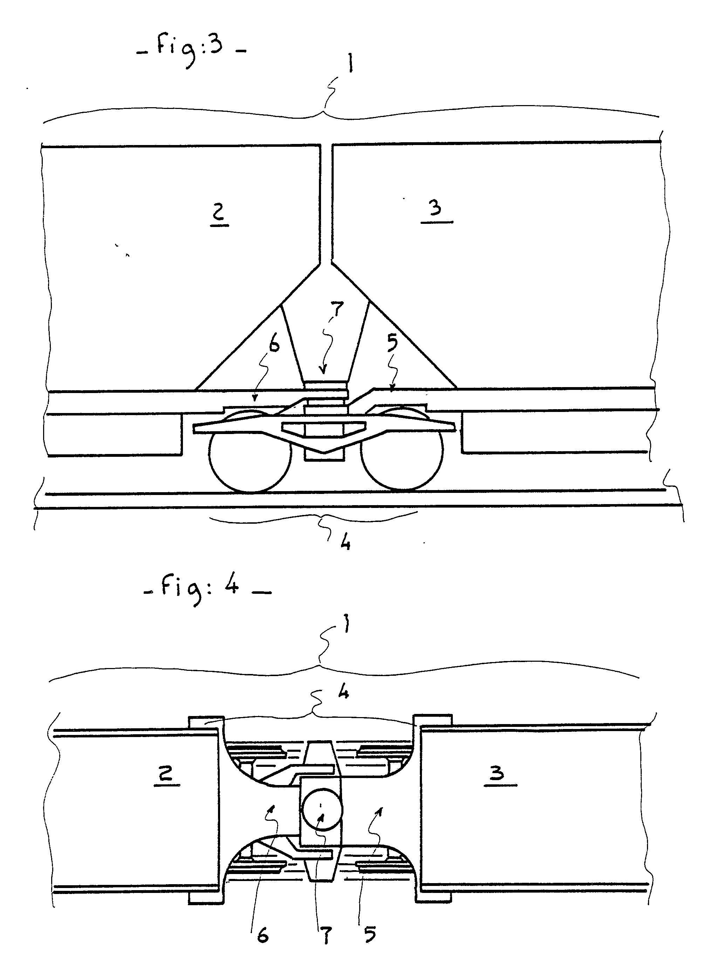

　　- figure 3 : en vue de profil, deux extrémités dde véhicules assemblés avec le dispositif d'accouplement de l'invention,

　　- figure 4 : en vue de dessus, ces deux extrémités de véhicules.

En se reportant au dessin, on voit une rame 1 de véhicules 2, 3 et plus particulièrement une rame de véhicules ferroviaires.

Celle-ci est classiquement constituée d'au moins un véhicule de tête et d'un véhicule de queue tous deux équipés des organes de tamponnement et de traction et entre lesquels est généralement attelé au moins un véhicule intermédiaire le tout porté par des ensembles de roulement 4.

Au lieu que les extrémités 5, 6 de ces véhicules 2, 3 possèdent toutes leurs propres ensembles de roulement 4, tels des boggies, les extrémités 5, 6 en vis à vis des véhicules contigus sont reliées entre elles par un dispositif d'accouplement 7 par lequel elles sont également reliées à un boggie commun 4.

Les extrémités (5, 6) sont généralement constituées chacune en caisson comprenant une membrure supérieure (35 ou 129) et une membrure inférieure (29 ou 33) reliées entre elles par des longrines.

De manière connue, ce dispositif 7 assure entre les véhicules et avec le boggie 4 une liaison sphérique.

Pour la liaison avec le boggie 4, le dispositif comprend, associé à l'une 6 des extrémités 5, 6 de véhicule, une large coupelle 8 à doubles portées sphériques 9, 10, dont la portée externe 9 coopère avec la portée sphérique concave 11 d'une large crapaudine 12 portée par le boggie 4 tandis que la portée interne 10 de la coupelle 8 reçoit la portée sphérique convexe 13 d'une bride 14 traversée , ainsi que la coupelle 8 et la crapaudine 12 par un tirant 15 d'axe vertical tel un boulon retenant la coupelle 8 en appui sur la crapaudine 12.

Pour le passage du tirant 15, la bride 14, la coupelle 8 et la crapaudine 12 présentent un orifice dont celui 16 de la coupelle 8 est de diamètre suffisant pour libérer l'articulation sphérique de la coupelle entre la bride et la crapaudine.

Pour un positionnement précis de la portée sphérique 13 de la bride 14 par rapport à celle 11 de la crapaudine 12, la crapaudine présente en son centre un moyeu 17 traversé par le tirant 15 et dont l'extrémité s'engage avec un ajustement précis dans un logement 18 creusé dans la bride.

Afin de régler la pression d'appui de la coupelle sur la crapaudine, un organe élastique 19 est intercalé entre d'une part l'une des extrémités du tirant c'est à dire sa tête 20 ou son écrou 21 et d'autre part, celle des faces 22, 23 de la bride 14 et de la crapaudine 12 qui est en vis à vis de cette extrémité du tirant 15.

Une rondelle 24 est intercalée de même manière à son autre extrémité.

Entre la portée externe 9 de la coupelle 8 et la portée 11 de la crapaudine est intercalée une garniture d'usure 25.

De préférence, la coupelle 8 présente une collerette 26 percée de trous 27 de passage d'organes de fixation 28 à l'extrémité 6 de véhicule, tels des boulons.

Pour le positionnement précis et la transmission des efforts de traction, sous sa membrure inférieure 29, cette extrémité 6 porte une bague de centrage 30 par exemple fixée par une soudure 31 et qui s'engage avec un ajustement précis dans un alésage 32 de l'entrée de la coupelle 8.

Pour la liaison des extrémités 5, 6 des véhicules 2, 3 entre elles, le dispositif comprend de manière connue deux portées sphériques 109, 111 présentées chacune par une des pièces 108, 112 chacune solidaire d'une des extrémités 5, 6 de véhicule 2, 3.

Selon une caractéristique de l'invention, pour maintenir énergiquement en position de coopération les portées sphériques 109, 111 de liaison entre elles des extrémités 5, 6 de véhicules, le dispositif 7 comprend, outre les deux portées sphériques 109, 111 précitées :

- d'une part, solidaire de l'une 6 des extrémités 5, 6 de véhicule 2, 3, une structure 50 délimitant avec l'extrémité 6 correspondante une fourche 55 dont les branches 6, 50 ont leurs axes longitudinaux qui se surplombent et entre lesquelles branches 6, 50 de laquelle fourche 55 s'insère l'autre extrémité 5 de véhicule et,

- d'autre part deux portées sphériques complémentaires 51, 52 coopérant entre elles et présentées par des pièces 53, 54 solidaires, l'une 54 de la structure 50 précitée et l'autre 53 de l'extrémité 5 de véhicule s'insérant dans la fourche, ces portées sphériques complémentaires 51, 52 étant concentriques aux premières portées sphériques 109, 111 des pièces de liaison 108, 112 insérées entre les extrémités de véhicule.

Selon une forme préférée de réalisation, les pièces 108, 112 insérées entre les extrémités de véhicule et celles 8, 12 insérées entre l'une 6 des extrémités 5, 6 et le boggie sont superposées et ont les courbures de leurs portées respectives qui tournent leur concavité l'une vers l'autre.

Avantageusement les pièces 108, 112 insérées entre les extrémités de véhicule et celles 8, 12 insérées entre l'une des extrémités 5, 6 et le boggie 4 sont identiques et montées symétriquement.

Quoiqu'il en soit, de préférence, parmi les pièces 108 à 132 assurant la liaison entre les véhicules 2, 3 :

- l'une de celles 108, 112 présentant les portées sphériques 109, 111 consiste en une crapaudine 112 fixée à la membrure inférieure 33 de l'extrémité 5 de véhicule s'insérant dans la fourche et,

- l'autre consiste en une coupelle 108 à doubles portées sphériques 109, 110 coopérant l'une avec la portée sphérique 111 de la crapaudine 112 associée à l'autre 5 extrémité de véhicule et l'autre avec la portée sphérique 113 d'une bride 114, entre lesquelles crapaudine 112 et bride 114 la coupelle 108 est pincée à l'aide d'un tirant 115.

A l'exemple de la première coupelle 8, cette coupelle 108 porte une collerette 126 percée de trous 127 pour sa fixation par exemple à l'aide de boulons 128 sur la membrure supérieure 129 de l'extrémité 6 de véhicule formant l'une des branches de la fourche.

Pour résister aux efforts de traction et pour un positionnement rigoureux de la coupelle 108 par rapport à cette extrémité 6 et à la coupelle 8 de la liaison au boggie, sur ladite membrure supérieure 129 est fixée une bague de centrage 130 s'engageant avec un ajustement précis dans un alésage 132 de la coupelle.

Quant aux pièces 53, 54 présentant les portées complémentaires 51, 52, elles consistent par exemple :

- en une coupelle 53 fixée sur le dos de la membrure inférieure 33 de l'extrémité 5 de véhicule s'insérant dans la fourche et,

- en une crapaudine 54 associée à la structure 50 réalisant l'une des branches de la fourche et qui rejoint la coupelle 53 en traversant librement un passage 34 prévu à cet effet dans la membrure supérieure 35 de l'extrémité 5 de véhicule s'insérant dans la fourche,

cette coupelle et cette crapaudine présentant chacune en leur centre un large orifice 56a, 56 d'accès aux premières portées sphériques 109, 111 et notamment au tirant 115 les retenant en position de coopération par exemple pour un réglage ou une désolidarisation des deux extrémités 5, 6 de véhicule pour modifier la rame ou effectuer une réparation.

De même manière, le boggie présente un passage (non représenté) jusqu'au tirant 15 en vue de modifier le réglage ou d'un démontage/remontage du boggie.

## Revendications

1. Dispositif d'accouplement de véhicules constituant une rame, telle une rame de véhicules ferroviaires constituée au moins d'un véhicule de tête et d'un véhicule de queue tous deux équipés des organes de tamponnement et de traction et entre lesquels est généralement attelé au moins un véhicule intermédiaire le tout porté par des ensembles de roulement (4),

dans laquelle rame, au lieu que les extrémités (5, 6) de ces véhicules (2, 3) possèdent toutes leurs propres ensembles de roulement (4), tels des boggies, les extrémités (5, 6) en vis à vis des véhicules contigus sont reliées entre elles par un dispositif d'accouplement (7) par lequel elles sont également reliées à un boggie commun (4),

lequel dispositif (7) assure entre les véhicules et avec le boggie (4) une liaison sphérique,

lesquelles extrémités (5, 6) sont généralement constituées chacune en caisson comprenant une membrure supérieure (35 ou 129) et une membrure inférieure (29 ou 33),

lequel dispositif comprend, pour la liaison de ces extrémités (5, 6) des véhicules (2, 3), deux portées sphériques (109, 111) présentées chacune par une des pièces (108, 112) elles-mêmes chacune solidaire d'une des extrémités (5, 6) de véhicule (2, 3), ce dispositif (7) étant **CARACTERISE** en ce que, pour maintenir énergiquement en position de coopération les portées sphériques (109, 111) de liaison entre elles des extrémités (5, 6) de véhicules, il comprend outre les deux portées sphériques (109, 111) précitées :

- d'une part, solidaire de l'une (6) des extrémités (5, 6) de véhicule (2, 3), une structure (50) délimitant avec l'extrémité (6) correspondante une fourche (55) dont les branches (6, 50) ont leurs axes longitudinaux qui se surplombent et entre lesquelles branches (6, 50) de laquelle fourche (55) s'insère l'autre extrémité (5) de véhicule et,

- d'autre part deux portées sphériques complémentaires (51, 52) coopérant entre elles et présentées par des pièces (53, 54) solidaires, l'une (54) de la structure (50) précitée et l'autre (53) de l'extrémité (5) de véhicule s'insérant dans la fourche, ces portées sphériques complémentaires (51, 52) étant concentriques aux premières portées sphériques (109, 111) des pièces de liaison (108, 112) insérées entre les extrémités de véhicule.

2. Dispositif selon la revendication 1 qui, pour la liaison des extrémités (5, 6) avec le boggie comprend deux portées sphériques (9, 11) présentées par des pièces (8, 12) portées l'une par le boggie (4) et l'autre par l'une des extrémités de véhicule **caractérisé** en ce que les pièces (108, 112) insérées entre les extrémités de véhicule et celles (8, 12) insérées entre l'une (6) des extrémités (5, 6) et le boggie sont superposées et ont les courbures de leurs portées respectives qui tournent leur concavité l'une vers l'autre.

3. Dispositif selon la revendication 2 **caractérisé** en ce que les pièces (108, 112) insérées entre les extrémités de véhicule et celles (8, 12) insérées entre l'une des extrémités (5, 6) et le boggie (4) sont identiques et montées symétriquement.

4. Dispositif selon l'une quelconque des revendications 1 à 3 dont les pièces (108, 112) insérées entre les extrémités de véhicule et celles (8, 12 ou 108, 112) insérées entre une de ces extrémités et le boggie comprennent une large coupelle (8, 108) à doubles portées sphériques (9, 10, 109, 110), dont la portée externe (9, 109) coopère avec la portée sphérique concave (11, 111) d'une large crapaudine (12, 112) portée par le boggie (4) tandis que la portée interne (10, 110) de la coupelle (8, 108) reçoit la portée sphérique convexe (13, 113) d'une bride (14, 114) traversée , ainsi que la coupelle (8, 108) et la crapaudine (12, 112) par un tirant (15, 115) d'axe vertical tel un boulon retenant la coupelle (8, 108) en appui sur la crapaudine (12, 112),

pour le passage duquel tirant (15, 115), la bride (14, 114), la coupelle (8, 108) et la crapaudine (12, 112) présentent un orifice dont celui (16, 116) de la coupelle (8, 108) est de diamètre suffisant pour libérer l'articulation sphérique de la coupelle entre la bride et la crapaudine,

ce dispositif étant **caractérisé** en ce que l'extrémité (6) de véhicule aux membrures inférieure et supérieure de laquelle sont associées tant la coupelle (8) de liaison au boggie que la coupelle (108) de liaison à l'autre, porte sur chacune de ses membrures inférieure et supérieure une bague de centrage (30 ou 130) qui s'engage avec un ajustement précis dans un alésage (32 ou 132) de l'entrée de la coupelle (8 ou 108) et une bague de centrage (130 ou 30) qui s'engage avec un ajustement précis dans un alésage (132 ou 32) de l'entrée de la coupelle (108 ou 8).

5. Dispositif selon l'une quelconque des revendications 1 à 4 **caractérisé** en ce que les pièces (53, 54) présentant les portées complémentaires (51, 52) consistent :

- en une coupelle (53) fixée sur le dos de la membrure inférieure (33) de l'extrémité (5) de véhicule s'insérant dans la fourche (55) et,

- en une crapaudine (54) associée à la structure (50) réalisant l'une des branches de la fourche (55) et qui rejoint la coupelle (53) en traversant librement un passage (34) prévu à cet effet dans la membrure supérieure (35) de l'extrémité (5) de véhicule s'insérant dans la fourche (55),

cette coupelle et cette crapaudine présentant chacune en leur centre un large orifice (56a, 56) aux premières portées sphériques.

6. Rame de véhicule et notamment de véhicules ferroviaires constituée au moins d'un véhicule de tête et d'un véhicule de queue tous deux équipés des organes de tamponnement et de traction et entre lesquels est généralement attelé au moins un véhicule intermédiaire le tout porté par des ensembles de roulement (4),

dans laquelle rame, au lieu que les extrémités (5, 6) de ces véhicules (2, 3) possèdent toutes leurs propres ensembles de roulement (4), tels des boggies, les extrémités (5, 6) en vis à vis des véhicules contigus sont reliées entre elles par un dispositif d'accouplement (7) par lequel elles sont reliées à un boggie commun (4), lequel dispositif (7) assure entre les véhicules et avec le boggie (4) une liaison sphérique,

lequel dispositif comprend :

- pour la liaison des extrémités (5, 6) des véhicules (2, 3) entre elles, deux portées sphériques (109, 111) présentées chacune par une des pièces (108, 112) elles-mêmes chacune solidaire d'une des extrémités (5, 6) de véhicule (2, 3) et,

- pour la liaison des extrémités (5, 6) avec le boggie, deux portées sphériques (9, 11) présentées par des pièces (8, 12) portées l'une par le boggie (4) et l'autre par l'une des extrémités de véhicule,

cette rame étant **caractérisée** en ce qu'elle est pourvue d'un dispositif de liaison (7) selon l'une quelconque des revendications 1 à 5.

- Fig:1 -

_fig:2_

_ Fig:3 _

_ Fig: 4 _

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | CH-A- 350 007 (SCHWEIZERISCHE WAGONS- UND AUFZÜGEFABRIK)<br>* En entier, en particulier figure 2 *<br>--- | 1 | B 61 F 5/16<br>B 61 F 3/12<br>B 61 G 5/02 |
| A | FR-A-1 561 318 (C.I.M.T.)<br>* En entier, en particulier figures 2,5 *<br>--- | 1,4-6 | |
| A | FR-A-2 348 092 (M.T.E.)<br>* Revendications 3,8; figures 1,4,5 *<br>--- | 1 | |
| A | US-A-2 125 184 (KJOLSETH)<br>* En entier *<br>--- | 1 | |
| A | BE-A- 728 101 (COMPAGNIE AUXILIAIRE INTERNATIONALE DE CHEMINS DE FER, S.A.)<br>* Revendications 1-4; figure 1 *<br>----- | 1,4 | |

| DOMAINES TECHNIQUES RECHERCHES (Int. Cl.5) |
|---|
| B 61 F<br>B 61 G |

Le présent rapport a été établi pour toutes les revendications

| Lieu de la recherche | Date d'achèvement de la recherche | Examinateur |
|---|---|---|
| LA HAYE | 08-12-1989 | SCHMAL R. |